# EUROPÄISCHE PATENTSCHRIFT

(11) **EP 3 254 090 B1**
(45) Veröffentlichungstag und Bekanntmachung des Hinweises auf die Patenterteilung: **20.11.2019**
(21) Anmeldenummer: 16702714.3
(22) Anmeldetag: 03.02.2016
(51) Int. Cl.: G01N 21/90

(54) **GEFÄSS-INSPEKTIONSEINRICHTUNG**
VESSEL INSPECTION DEVICE
DISPOSITIF DE CONTRÔLE DE RÉCIPIENTS

(30) Priorität: 03.02.2015 DE 102015001332
(43) Veröffentlichungstag der Anmeldung: 13.12.2017
(73) Patentinhaber: Mühlbauer GmbH & Co. KG, 93426 Roding (DE)
(72) Erfinder: FREIBERGER, Ralf, 52353 Dueren (DE); HOCHWIMMER, Guenter, 93191 Rettenbach (DE); PORTH, Ulf, 42499 Hueckeswagen (DE)
(74) Vertreter: Schmidt, Steffen J.
(86) Internationale Anmeldenummer: PCT/EP2016/052241
(87) Internationale Veröffentlichungsnummer: WO 2016/124624

(56) Entgegenhaltungen:
- WO-A1-90/04773
- GB-A- 881 765
- US-A- 3 687 559
- US-A- 5 563 700
- US-A- 5 699 152
- US-A1- 2009 066 944

## Beschreibung

### Technisches Gebiet, Technologischer Hintergrund

Nachstehend wird eine Gefäß-Inspektionseinrichtung beschrieben. Mit dieser Inspektionseinrichtung können Gefäße, insbesondere deren empfindlicher Flaschen- oder Dosenhals auf Schäden untersucht werden.

Unter Gefäßen sind hier z.B. für die Aufnahme von Lebensmitteln, Getränken, Chemikalien, Medikamenten und anderem dienende Dosen und Flaschen verstanden, die im Produktions- und Abfüllprozess auf Schadstellen untersucht werden müssen. So kann sichergestellt werden, dass einerseits der Abfüllprozess störungsfrei abläuft und dass andererseits der Inhalt der Gefäße nicht verdirbt oder hinsichtlich seiner Qualität beeinträchtigt wird sowie ein Auslaufen der Flüssigkeiten sicher verhindert wird.

Hierzu wurden bisher meist manuelle Stichproben während der Produktion durchgeführt. Alternativ oder zusätzlich nutzen aus der betrieblichen Praxis bekannte Anlagen auch Frontalkameras zum Erfassen und Bildverarbeiten des frontal aufgenommenen empfindlichen Flaschen- oder Dosenhalses.

Dosen oder Flaschen werden in vielen Ausgestaltungen durch Umbördeln des Dosen- oder Flaschenhalses im Füll- oder Öffnungsbereich umgeformt. Diese Bördelung dient zum Befestigen eines Verschlusses, z.B. in Form einer Deckplatte, eines Kronkorkens oder dergl. Dazu darf die Bördelung keine schadhaften Stellen aufweisen. Falls im Umformprozess den Füll- oder Öffnungsbereich beschädigt wurde, so dass z. B. ein Kronkorken oder eine Verschlussfolie nicht sicher dichtend aufgesetzt werden kann, wird die entsprechende Flasche oder Dose ausgesondert.

Bördelränder an Dosenöffnungen oder Flaschenhalswulste bilden Hinterschnitte, die bei einem frontal aufgenommenen Flaschen- oder Dosenhals nur schwer untersucht werden können. Bereiche, die - von der Kamera aus - gesehen unterhalb der Ebene des Füll- oder Öffnungsbereichs liegen, werden nicht oder nur unzureichend abgebildet und können daher nicht ausreichend kontrolliert werden.

### Stand der Technik

Aus der DE 103 12 051 A1 ist eine Abbildungsoptik bekannt, um Mantelflächen rotationssymmetrischer Objekte auf eine Abbildungsebene mittels eines reflektierenden Elements abzubilden, dessen Reflexionsfläche einen kreisförmigen Querschnitt in einer Ebene senkrecht zur optischen Achse haben kann. Dabei wird durch in Strahlrichtung hinter und vor dem reflektierenden Element angeordnete winkelreduzierende Elemente jeweils der Winkel zwischen einem von dem Objekt ausgehenden Lichtstrahl und der optischen Achse reduziert.

Aus der DE 197 26 967 C1 ist eine Kamera mit Optikelement, gekoppelt mit einer Bildverarbeitungseinheit, bekannt. Diese Anordnung dient zum optischen Abbilden einer Mantelfläche eines Gegenstands. Eine Lichtstrahlumlenkeinrichtung ist mit Abstand über dem Objekt angeordnet, um den Lichtstrahlengang von den Objektseitenflächen verzerrungsfrei an die Kamera umzulenken.

Aus der DE 10 2010 032 410 A1 ist eine Inspektionsvorrichtung zur Untersuchung von an einer Bearbeitungsmaschine fest angeordneten Gefäßen bekannt, die eine Kamera mit einem ersten optischen Bauelement aufweist und mit einer Bildverarbeitungseinheit gekoppelt ist und die ortsfest in Bezug auf ein zu inspizierendes Gefäß angeordnet ist. Ein zweites optisches Bauelement in Gestalt eines konkav gewölbten oder Parabolspiegels mit einer Durchtrittsöffnung oder eine Endoskopoptik dienen zur Untersuchung des Gefäßhalses. Die Endoskopoptik ist durch eine Halterung in dem Halterohr parallel und zentriert zu einer zentralen Längsachse des Halterohrs gehalten und ein erstes Ende der Endoskopoptik weist zu der Kamera. Ein Aufnahmebereich der Kamera ist mittels des ersten optischen Bauelements auf eine Stirnfläche an dem ersten Ende der Endoskopoptik einstellbar. Ein in der Inspektionsposition befindliches Gefäß weist mit seiner Gefäßöffnung zu einem zweiten Ende der Endoskopoptik.

Diese Anordnung erfüllt wohl die Anforderungen an eine hohe Präzision der Erfassung von schadhaften Stellen nicht, da eine weitere Ausgestaltung in diesem Dokument an der an Stelle einer Kamera zwei Kameras und eine Beleuchtungseinheit vorgesehen sind. Erst der Einsatz der beiden Kameras ermöglicht laut diesem Dokument eine ausreichende Beurteilung der Verschattungsbereiche des Gefäßes, da sich mit dem konkav gewölbten oder Parabolspiegel nicht alle vom Gefäß reflektierten Strahlengänge von einer einzigen Kamera fokussieren lassen.

Aus der DE 40 24 546 C1 ist ein Verfahren zum Abtasten der Oberfläche eines zylindrischen Objekts, und eine entsprechende Vorrichtung bekannt. Die Oberfläche des Objektes muss imstande sein, Licht zu reflektieren, zu streuen oder zu brechen. Die Vorrichtung hat eine Lichtquelle, deren Lichtbündel auf das Objekt rings eines Umfangsbandes geworfen, vom Objekt reflektiert und danach das Abbildungs-Lichtbündel mittels eines Abbildungsobjektivs auf einen optoelektronischen geradlinigen Zeilensensor mit einer elektrischen Auswerteeinrichtung fokussiert wird. Aufeinanderfolgende Umfangsbereiche des Objektes werden zeitlich nacheinander abgetastet. Zwischen dem Objekt und dem Zeilensensor ist eine Bilddrehungsoptik angeordnet, die einerseits die Abtastung des Objekts bewirkt und andererseits die Drehung des von dem Abbildungsobjektiv erzeugten Abbildes auf den Objektumfang derart kompensiert, dass das Abbild unabhängig vom Drehwinkel stets dieselbe Orientierung hat, nämlich parallel zur Längsachse des Objekts geführt wird. Damit soll die Oberfläche von Objekten mit relativ großem Durchmesser ohne Anwendung eines Ringsensors oder ohne Auslesen aus einem Flächensensor, mit hoher Umfangsauflösung abgetastet werden.

Aus der DE 94 15 769 U1 ist eine Vorrichtung zum Überprüfen von Flaschen auf Beschädigung bekannt. Die Vorrichtung soll dem Zweck dienen, den Mündungsbereich und das Gewinde am Flaschenhals gleichzeitig mit einen einzelnen Kamerasystem zu überprüfen. Eine entsprechende Spiegelanordnung leitet die Ansicht auf die Mündung und die Ansicht auf das Gewinde gemeinsam in das Kamerasystem. Insbesondere hat die Vorrichtung einen photosensitiven Bildaufnehmer und eine Linse, die den Teil der zu untersuchenden Flasche, der sich im direkten Strahlengang der Linse befindet, auf dem Bildaufnehmer abbildet und eine Spiegelanordnung, die Teile der Flasche, die sich nicht im direkten Strahlengang der Linse befinden, zusätzlich zu den im direkten Strahlengang der Linse befindlichen Teilen der Flasche auf dem Bildaufnehmer abbildet.

Die EP1826556 (A2) offenbart eine Prüfeinrichtung für Werkstücke mit mindestens einer ein Objektiv aufweisenden elektronischen Kamera, deren optische Achse koaxial zu einer Symmetrie- bzw. Mittelachse des Werkstücks ausrichtbar ist, sowie einem im Strahlengang vor dem Objektiv angeordneten Umlenkspiegel, der das von dem vor dem Objektiv nahezu koaxial platzierbaren, rotationssymmetrischen Werkstück emittierte Licht in eine Richtung zur Kamera reflektiert, wobei der Umlenkspiegel als Hohl- oder Ringspiegel mit einer koaxial zur optischen Achse des Objektivs angeordneten Mittelachse ausgebildet ist und eine kegelmantelförmige oder teilsphärische Reflexionsfläche aufweist und neben dem vom Umlenkspiegel direkt zum Objektiv reflektierten Bildanteil auch das von dem Werkstück emittierte Licht und der zugehörige Bildanteil zumindest teilweise direkt von der Kamera erfassbar ist. Dazu hat der Ringspiegel oder die Reflexionsfläche einen minimalen Durchmesser und einen maximalen Durchmesser aufweist, wobei der minimale Durchmesser maximal so gross ist wie eine Werkstückbreite und das Werkstück koaxial zum Ringspiegel platzierbar ist.

Die WO 90/04773 A1 betrifft ein Verfahren zum Prüfen einer Folge von Gegenständen, die jeweils ein Ende und Seiten neben dem Ende haben. Das Verfahren weist die Schritte auf: Anordnen des Körpers in einer Inspektionsstation mit einem in Richtung des Endes gerichten optischen System, wobei das optische System zur Erzeugung eines fokussierten Bildes dient und jeder Punkt auf dem Gegenstand betrachtet wird, um einen entsprechenden Punkt im fokussierten Bild zu erzeugen. Das optische System definiert eine Sichtlinie zu dem Ende und schräg zu den Seiten hin gerichtete Lichtstrahlen, die jeweils auf einen Punkt in dem Bild fokussiert sind. Mit dem optischen System wird ein zweidimensionales Bild des Endes und der Seiten erfasst. Dabei ist das Bild ein fokussiertes, aber räumlich verzerrtes Bild des Endes und der Seiten, wobei die Seiten oben neben dem Ende gefaltet erscheinen. Unterschiedliche Gegenstände werden unterschieden durch Erkennen von Merkmalen, die in dem zweidimensionalen Bild erscheinen.

US 2009/066944 A1 zeigt eine Vorrichtung und ein Verfahren zur Erkennung von Defekten, welche sich an der Öffnung eines Glasbehälters befinden. Hierbei wird die Öffnung des Glasbehälters durch eine Kameravorrichtung inspiziert. Optisch aktive Elemente ermöglichen die gleichzeitige Inspektion der Glasbehälteröffnung aus verschiedenen Betrachtungswinkeln.

GB 881 765 A zeigt eine Inspektionseinrichtung für transparente Körper, insbesondere Glasflaschen, welche hierzu an dieser vorbeigeführt werden. Optisch aktive Elemente ermöglichen auch hier die gleichzeitige Inspektion aus verschiedenen Betrachtungswinkeln.

Weiterer technologischer Hintergrund ist den Dokumenten DE 197 26 967 C1, DE 103 12 051 A1, FR 2 896 041 A1, US 5,912,776, EP 0 426 968 A1, WO 2009/066165 A1, DE 199 20 007 C1, und DE 91 01 935 U1 entnehmbar.

### Zugrundeliegendes Problem

Ausgehend von diesem Stand der Technik ergibt sich das Erfordernis, eine verbesserte Inspektionseinrichtung und ein entsprechendes Verfahren zur Untersuchung von Gefäßen bereitzustellen, die eine treffgenaue Identifizierung von Schadstellen an den zu inspizierenden Gefäßen erlaubt. Diese verbesserte Inspektion soll Abweichungen von einer gewünschten Qualität von Gefäßen unmittelbar im Fertigungsablauf präzise und zuverlässig verfügbar machen, damit entsprechende Schritte (z.B. Nacharbeiten oder Aussondern des betreffenden Gefäßes) eingeleitet werden können.

### Lösung des Problems

Die komplette Inspektionseinrichtung (= Kamera, Objektivlinse und optisches Element, ggf. Beleuchtungseinrichtung) und der zu inspizierende Gegenstand mit dem Hinterschnitt, also z.B. das Gefäß, sind zueinander nicht ortsfest; vielmehr werden die Inspektionseinrichtung und der zu inspizierende Gegenstand für die jeweilige Inspektion relativ zueinander verfahren und positioniert. Dabei sind Kamera, Linse und optisches Element zueinander in ihren Abständen festgelegt und die komplette Inspektionseinrichtung mit dem optischen Element, der Kamera (mit Objektivlinse) und der Beleuchtungseinrichtung wird zur Bildaufnahme bei jedem Inspektionsvorgang relativ zum zu inspizierenden Gegenstand verfahren. Das zur optischen Achse der Kamera rotationssymmetrische optische Element bildet etwaige Fehlstellen hinter einem Hinterschnitt des Gefäßes für die Kamera vergrößert ab. Das optische Element ist in der hier beschriebenen Inspektionseinrichtung ein Spiegel, zum Beispiel in Gestalt eines zur Kamera hin sich weitenden Ringspiegels, dessen die Bildaufnahmeachse enthaltender Längsschnitt die Gestalt eines zur Bildaufnahmeachse geneigten und radial nach außen verschobenen Ellipsenabschnitts hat.

### Vorteile und Varianten

Die nach außen verschobene, geneigte Ellipsenabschnittsgestalt des Spiegels hat einerseits eine gegenüber herkömmlichen Parabolspiegeln eine verbesserte Lichtsammel-Effizienz, andererseits eine Vergrößerungswirkung und schließlich auch einen präziser auf die interessierende Region an dem Gefäß mit einem Hinterschnitt am Rand oder der Öffnung des Gefäßes positionierbaren Brennpunkt.

Die hier vorgestellte Einrichtung kann Defekte aus vorhergehenden Produktionsschritten bei gebördelten Dosen oder Flaschen mit einem Wulst im Füll- oder Öffnungsbereich seitlich und insbesondere hinter dem Bördel erkennen, also einem Bereich, der in der üblichen Frontal-Ansicht nicht gesehen wird. Die hier vorgestellte Lösung ermöglicht ein Überprüfen der interessierenden Region an dem Gefäß hinter einem Hinterschnitt am Rand oder der Öffnung des Gefäßes auf Fehlstellen. Gleichzeitig kann auch die Stirnfläche des Randes oder der Öffnung des Gefäßes auf Fehlstellen inspiziert werden.

Dies gelingt mit der hier vorgestellten Lösung, obwohl Schulter und Bördel einer Dose oder der Hals einer Flasche vielfältig unterschiedlich geformt sein können. Ein Parabolspiegel hat einen einzigen Brennpunkt. Im Gegensatz dazu hat ein Ellipsoidabschnitts-Spiegel, bei dem die erzeugende Ellipse wie hier, zwei unterschiedliche Halbachsen hat, zwei Brennpunkte. Wegen dieser zwei Brennpunkte kann sowohl der Vergrößerungsfaktor als auch der erfasste Gegenstandsausschnitt der interessierenden Region durch entsprechende Festlegung der Ellipsenparameter (Halbachsen, Neigungswinkel der Ellipse und radiale Verschiebung) optimiert werden. Durch die Festlegung der Länge des Ellipsenabschnitts lassen sich außerdem die objektseitige und die bildseitige numerische Apertur optimieren.

Die interessierende Region des Gefäßes und die Inspektionseinrichtung sind derart in die Inspektionsposition zu einander zu positionieren, dass die interessierende Region in einer Brennebene des Rotationsellipsoid-Abschnitts liegt. Mit einem Spiegel der hier beschriebenen Art können sowohl die interessierende Region des Gefäßes hinter dem Hinterschnitt (also von der Kamera aus gesehen hinter dem Rand oder der Öffnung des Gefäßes) als auch die Stirnfläche des Randes oder der Öffnung des Gefäßes mit der Kamera gleichzeitig fokussiert werden. Dies erlaubt z.B. ein Parabolspiegel nicht, da er nur einen Ort, nämlich den Bereich hinter dem Hinterschnitt ins Unendliche projiziert. Wenn nun die Kamera mit ihrem Objektiv zur Aufnahme des Hinterschnitts ebenfalls auf Unendlich gestellt ist, kann die nicht im Unendlichen liegende Stirnfläche des Randes oder der Öffnung des Gefäßes, mit dieser Kamera/ Objektiv-Einstellung nicht fokussiert werden.

Mit der hier beschriebenen Lösung zu untersuchende Gefäße können aus Metall, Kunststoff (z.B. PET oder dergl.), Keramik oder Glas hergestellt sein. Die hier beschriebene Anordnung ist dazu geeignet und bestimmt, Schädigungen der Oberfläche solcher Gefäße durch Bild-Erfassung und anschließende Bild-Verarbeitung festzustellen. Schädigungen der festzustellenden Art sind dabei Kratzer, Vorsprünge, Grate, Dellen, Risse oder Sprünge, (Micro-)Löcher, Asymmetrien oder dergl. der an Innen- oder Außenseite des Gefäßes.

Einen - optionalen - Teil der Inspektionseinrichtung bildet die Beleuchtungseinrichtung, welche die interessierende Region hinter dem Hinterschnitt entweder direkt oder indirekt ausleuchtet.

Eine weitere Variante der vorliegenden Gefäß-Inspektionseinrichtung ist dazu eingerichtet und geeignet, unterschiedliche Gefäße (Gestalt, Länge, Durchmesser des Gefäß-Öffnungsbereichs, etc.) zu inspizieren. Um für unterschiedliche gestaltete Gefäße die optimale Ausleuchtung und die optimale Erfassung der interessierenden Region bei gleichzeitiger Ausschaltung von Fremdlichteinflüssen zu erreichen, sind in einer Variante der Inspektionseinrichtung das optische Element an einem Ende eines Rohrabschnitts angeordnet, der an seinem anderen Ende die Kamera mit ihrer Objektivlinse trägt.

Zur Fokussierung auf die Kameraoptik ist dabei das optische Element längsverschiebbar und/oder gegenüber der Bildaufnahmeachse neigbar, und in der gewünschten Fokus-Stellung festlegbar gestaltet. Dabei kann das optische Element unter Beibehaltung der Fokus- oder Justierlage einfach austauschbar am Ende des Rohrabschnitts arretierbar aufgenommen sein. Dies kann zum Beispiel durch einen federbelasteten Zapfen, der in eine seitliche Öffnung des Rohres taucht, eine Schraubverbindung oder einen Bajonettverschluss realisiert sein, welche(r) unverlierbar, direkt oder indirekt, das optische Element an dem Rohrabschnitt verriegelt.

Die Beleuchtungseinrichtung kann konzentriert an einem Ende des Rohrabschnitts, verteilt über den Rohrabschnitt an beiden Enden, oder entlang der Erstreckung des Rohrabschnitts angebracht sein.

Eine Variante mit einer indirekten Anbringung des optischen Elements am Ende des Rohrabschnitts kann auch durch einen zwischen dem optischen Element und dem Ende des Rohrabschnitts vorgesehenen Ring der Beleuchtungseinrichtung realisiert sein. Die Beleuchtungseinrichtung strahlt Licht mit auf die Bilderfassung entsprechend abgestimmtem Wellenlängenbereich (sichtbares Licht, Infrarot, Ultraviolett) - indirekt - auf das optische Element und oder direkt auf die interessierende Region an dem Gefäß.

Die zu inspizierenden Gefäße sind bei einer Variante der hier beschriebenen Inspektionseinrichtung in einer Inspektionsposition fest an der Bearbeitungsmaschine zum Beispiel in einem sogenannten Neckerrad oder Zangendrehteller angeordnet.

Die Kamera mit der Objektivlinse ist längs der optischen Achse der Kamera und der Objektivlinse beweglich in Bezug auf eine Inspektionsposition an der Bearbeitungsmaschine angeordnet.

Bei einer Variante der Inspektionseinrichtung ist die Kamera mit einer Bildverarbeitungseinheit verbunden. Die Bildverarbeitungseinheit kann mit einem zur Bildverarbeitung und Bildauswertung eingerichteten und programmierten Prozessor ausgestattet sein, der so Schädigungen der Oberfläche der Gefäße festzustellen in der Lage ist. Hierzu kann z.B. eine Datenbank mit Vergleichsbildern einwandfreier interessierender Region dem Prozessor zugeordnet sein. Die Kamera definiert mit ihrer Objektivlinse eine Bildaufnahmeachse, die mit der Mittellängsachse des Gefäßes dann fluchtet, wenn sich dieses in der Inspektionsposition befindet.

Der Rohrabschnitt mit dem optischen Element am Ende des Rohrabschnitts und ggf. der Beleuchtungseinrichtung ist an der Kamera und deren Objektivlinse so angeordnet, dass das optische Element am Ende des Rohrabschnitts von der Kamera abliegend ist. Das optische Element wirkt zusammen mit der Objektivlinse um der Kamera eine fokussierte Bildaufnahme von der interessierenden Region an dem Gefäß zu erlauben, sobald das optische Element seine vorgesehene Inspektionsposition relativ zu der interessierenden Region an dem Gefäß eingenommen hat. Dazu ist der Rohrabschnitt mit dem optischen Element, der Kamera und der Objektivlinse sowie ggf. der Beleuchtungseinrichtung als eine Einheit und die interessierende Region an dem Gefäß andererseits so zueinander verschiebbar angeordnet, dass die Fokussierung der interessierenden Region durch die Kamera möglich ist.

Der Rohrabschnitt, das optische Element am Ende des Rohrabschnitts und ggf. die Beleuchtungseinrichtung umschließen zumindest teilweise einen Hohlraum, der so bemessen ist, dass die interessierende Region an dem Gefäß hinter dem Hinterschnitt in Richtung der Gefäßöffnung in diesen Hohlraum wenigstens ein Stück eintauchen kann um seine Inspektionsposition einzunehmen. Dazu weist die Inspektionseinrichtung Mittel auf, um zum Aufnehmen eines Bildes zumindest das optische Element relativ zu der interessierenden Region des Gefäßes hin und weg zu verfahren. Anschließend kann ein weiteres zu inspizierendes Gefäß in seine Inspektionsposition gefördert werden. So kann mit der Kamera ein fokussiertes Bild des zu inspizierenden Gefäßes, genauer gesagt der interessierenden Region an dem Gefäß hinter dem Hinterschnitt in Richtung der Gefäßöffnung, erstellt werden.

In einer Variante bilden das optische Element, die Beleuchtungseinrichtung und die Kamera mit der Objektivlinse an dem Rohrabschnitt eine Inspektionseinrichtung, die eine als Ganzes längs der Bildaufnahmeachse verfahrbare Einheit darstellt.

### Kurze Zeichnungsbeschreibung

Weitere Ziele, Merkmale, Vorteile und Anwendungsmöglichkeiten ergeben sich aus der nachfolgenden Beschreibung von nicht einschränkend zu verstehenden Ausführungsbeispielen mit Bezug auf die zugehörigen Zeichnungen. Dabei bilden alle beschriebenen und / oder bildlich dargestellten Merkmale für sich oder in beliebiger Kombination den hier offenbarten Gegenstand, auch unabhängig von ihrer Gruppierung in den Ansprüchen oder deren Rückbeziehungen. Die Abmessungen und Proportionen der in den Fig. gezeigten Komponenten sind hierbei nicht unbedingt maßstäblich; sie können bei zu implementierenden Ausführungsformen vom hier Veranschaulichten abweichen.

Die vorstehend erläuterten Einrichtungs- und Verfahrensdetails sind im Zusammenhang dargestellt. Es sei jedoch darauf hingewiesen, dass sie jeweils auch unabhängig voneinander sind und auch frei miteinander kombinierbar sind.
Fig. 1 veranschaulicht eine Variante einer Inspektionseinrichtung in einer seitlichen schematischen Schnittansicht mit einem in einer Inspektionsposition befindlichen Gefäß, wobei das optische Element einen Querschnitt eines radial nach außen verschobenen, geneigten Ellipsenabschnitts hat.
Fig. 2 und 3 veranschaulichen geometrische Gegebenheiten und Besonderheiten des optischen Elements.
Fig. 4 veranschaulicht ein Weg/Zeit-Diagramm einer möglichen Bewegung der Inspektionseinrichtung in die / aus der Inspektionsposition.

### Detaillierte Zeichnungsbeschreibung

Die hier vorgestellte Gefäß-Inspektionseinrichtung 10 ist anhand der Fig. erläutert. Dabei sind eine Reihe von Varianten möglich, die im Zusammenhang mit den Fig. zwar nicht im Einzelnen dargestellt sind, aber in der übrigen Beschreibung offenbart sind.

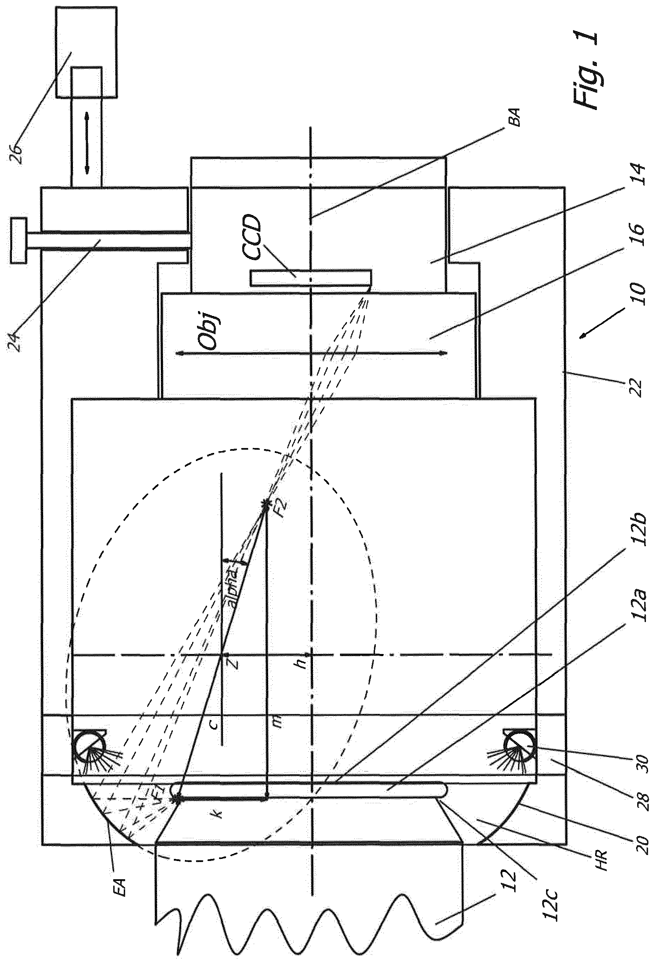

Eine in Fig. 1 schematisch veranschaulichte Gefäß-Inspektionseinrichtung 10 dient zur Untersuchung eines Gefäßes, wie einer in Fig. 1 teilweise veranschaulichten (Getränke-)Dose 12, auf Schäden im eine Umbördelung 12a oder eine Wulst aufweisenden Füll- oder Öffnungsbereiches 12b, die einen Hinterschnitt 12c bildet. Die Inspektionseinrichtung 10 hat eine Kamera 14 mit einem Bilderfassungselement CCD, eine der Kamera 14 zugeordnete Objektivlinse 16 und ein weiteres optisches Element in Form eines weiter unten im Detail erläuterten Spiegels 20. Diese Komponenten 14 - 20 der Inspektionseinrichtung 10 sind in ebenfalls weiter unten im Detail erläuterten Weise in ihren Abständen und ihrer Ausrichtung zueinander und zu einer Bildaufnahmeachse BA einstellbar und fixierbar.

Das optische Element, also der Spiegel 20, eine Beleuchtungseinrichtung 30 und die Kamera 14 mit der Objektivlinse 16 bilden eine als Ganzes längs der Bildaufnahmeachse BA verfahrbare Einheit.

Der Spiegel 20 ist an einem Ende (in Fig. 1 links) eines Rohrabschnitts 22 angeordnet, der an seinem anderen Ende (in Fig. 1 rechts) die Kamera 14 mit ihrer Objektivlinse 16 trägt, wobei die Kamera 14 und das optische Element 20 relativ zueinander längsverschiebbar und/oder gegenüber der Bildaufnahmeachse BA neigbar, und in der gewünschten Fokus-Stellung festlegbar gestaltet sind.Die Kamera 14 ist in dem Rohrabschnitt 22 längs der Bildaufnahmeachse BA verschiebbar aufgenommen und in der hier gezeigten Variante mittels mehrerer am Umfang des Rohrabschnitts 22 verteilt angeordneter Justier- und Fixierschrauben 24 in der gewünschten Stellung und Lage festzusetzen.

Ein elektrischer, pneumatischer oder hydraulischer Linear-Antrieb 26 ist an dem Rohrabschnitt 22 angelenkt, um die Inspektionseinrichtung 10 für das Aufnehmen eines Bildes relativ zu der interessierenden Region im Füll- oder Öffnungsbereich 12b des Gefäßes 12 hin und her zu verfahren.

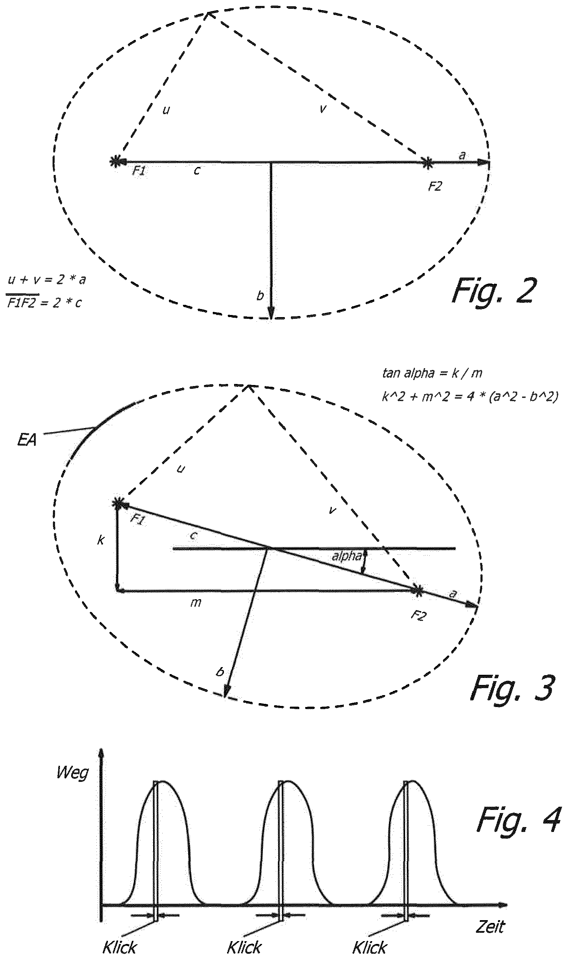

Unter Bezugnahme auf die Fig. 2 und 3 sind die geometrischen Gegebenheiten und Besonderheiten des optischen Elements, also des Spiegels erläutert. Wie in Fig. 1 veranschaulicht, hat der Spiegel 20 die Gestalt eines sich zur Kamera 14 hin weitenden Ringspiegels. Dieser Ringspiegel hat an seiner Innenseite eine Spiegelfläche. Diese Spiegelfläche ist rotationssymmetrisch. Ihre Erzeugende ist ein Abschnitt einer Ellipse, die zwei voneinander abweichende Halbachsen a, b hat. Die Ellipse ist gegen die Bildaufnahmeachse BA in ihrem Zentrum Z um einen Winkel alpha so geneigt, dass der Abschnitt EA der Ellipse von der Bildaufnahmeachse BA weiter weg liegt (siehe Fig. 3). Des Weiteren ist das Zentrum Z der um den Winkel alpha geneigten Ellipse um einen Abstand h von der Bildaufnahmeachse BA radial nach außen verschoben. Der derart relativ zur der Bildaufnahmeachse BA positionierte Abschnitt EA der Ellipse bildet die Erzeugende der Spiegelfläche des Spiegels 20, welche durch Rotation dieser Erzeugenden um die Bildaufnahmeachse BA entstanden gedacht werden kann. Der Winkel alpha, um den die Ellipse, oder genauer gesagt, der Abschnitt EA der Ellipse geneigt ist, und der Abstand h, um den die Ellipse von der Bildaufnahmeachse BA radial nach außen verschoben sind, hängt unter anderem von den Abmessungen des zu untersuchenden Gefäßes, der Gestalt und den Abmessungen des zu inspizierenden Füll- oder Öffnungsbereiches 12b, und des Hinterschnitt 12c ab. Der Ringspiegel 20 umschließt zumindest teilweise einen Hohlraum HR, der so bemessen ist, dass eine interessierende Region an dem Gefäß 12 hinter dem Hinterschnitt 12c in Richtung des Füll- oder Öffnungsbereiches 12b in diesen Hohlraum HR wenigstens ein Stück weit eintauchen kann, damit die Inspektionseinrichtung 10 und die interessierende Region an dem Gefäß 12 die Inspektionsposition zueinander einnehmen.

Der Winkel alpha, der Abstand h sowie die Halbachsen a, b sind so festgelegt, dass der nahe beim Abschnitt EA der Ellipse liegende Brennpunkt F1 der Ellipse hinter dem zu inspizierenden Hinterschnitt liegt, und der zweite Brennpunkt F2 der Ellipse im Zwischenbrennpunkt liegt, durch den die vom Hinterschnitt kommenden Lichtstrahlen gehen, wenn sie durch das Objektiv auf das Bilderfassungselement CCD fokussiert werden. Details hierzu sind den Fig. 1 - 3 zu entnehmen.

In der in Fig. 1 veranschaulichten Variante ist zwischen den Spiegel 20 und den Rohrabschnitt 22 ein Ring 28 mit einer Beleuchtungseinrichtung 30 in Gestalt einer Vielzahl am inneren Umfang des Rings 28 angeordneter Lichtquellen (z. B. LEDs) zwischengeschaltet. Diese Beleuchtungseinrichtung 30 dient dazu, die interessierende Region hinter dem Hinterschnitt 12c entweder direkt oder indirekt (über die Spiegelfläche) auszuleuchten. Je nach baulichen Gegebenheiten oder den optischen Eigenschaften des zu inspizierenden Gefäßes 12 (Material, Reflexions- oder Absorbtionseigenschaften) kann in hier nicht weiter veranschaulichten Varianten die Beleuchtungseinrichtung 30 auch an beiden Enden des Rohrabschnitts 22 oder entlang der Erstreckung des Rohrabschnitts 22 angebracht sein.

In der Beleuchtungseinrichtung befinden sich ein oder mehrere LED-Leuchtringe, welche ihr Licht auf eine jeweils diffuse Oberfläche strahlen, um ein möglichst homogenes Licht auf der Oberfläche des Gefäßes zu erzeugen. Alle LEDs werden in einer Variante gepulst betrieben. In der in Fig. 1 veranschaulichten Variante strahlen die Lichtquellen sowohl direkt auf die Deckfläche des Füll- oder Öffnungsbereiches, als auch auf den die torusförmige Seitenfläche der Umbördelung oder der Wulst und den ringförmigen Hinterschnitt (=Rückseite / Unterseite der Umbördelung).

Das aufgenommene Bild zeigt dann drei Ansichten, die Draufsicht von oben auf die Deckfläche des Füll- oder Öffnungsbereiches, die torusförmige Seitenfläche der Umbördelung oder der Wulst und den ringförmigen Hinterschnitt (=Rückseite / Unterseite der Umbördelung): Die Details des Hinterschnitts können erst dadurch erfasst werden, dass die dem Gefäß 12 zugewandte Kante des Ringspiegels sich entsprechend weit hinter der Umbördelung oder der Wulst des Füll- oder Öffnungsbereiches befindet.

Es ist in anderen als der hier gezeigten Varianten vorgesehen, dass ein Leuchtring Licht ausstrahlt, das im Gehäuse reflektiert wird und ein zweiter Leuchtring direkt in Richtung des Gefäßes strahlt. Die gesamte Anordnung bewegt sich auf die Dose zu und wird so weit bewegt, dass die Rückseite des Bördels ebenfalls erfasst werden kann.

Insbesondere um unterschiedliche Gefäße inspizieren zu können, ist der Spiegel 20 an einem Ende eines Rohrabschnitts 22 angeordnet, und der Rohrabschnitt 22 trägt an seinem anderen Ende die Kamera 14 mit ihrer Objektivlinse 16. Sowohl die Kameraoptik also auch der Spiegel sind in anderen Varianten durch hier nicht weiter veranschaulichte Bajonettverschlüsse, Feinstgewinde, oder dergl. relativ zueinander längsverschiebbar ausgestaltet. Außerdem können sowohl die Kameraoptik also auch der Spiegel gegenüber der Bildaufnahmeachse BA neigbar, und in der gewünschten Fokus-Stellung festlegbar gestaltet sein. Alle optischen Komponenten (Objektivlinse, Kameraoptik, Spiegel, ggf. Beleuchtungseinrichtung) sind immer starr zu einander und werden nur z.B. zu Justagezwecken relativ zueinander in ihrer Lage und Ausrichtung verändert.

So kann das optische Element 20 und / oder die Kamera 14 mit der Objektivlinse 16 unter Beibehaltung der Fokus- oder Justierlage austauschbar am Ende des Rohrabschnitts arretierbar aufgenommen sein.

Um ein möglichst präzises und aussagekräftiges Inspektionsergebnis zu erhalten, sind die zu inspizierenden Gefäße 12 an einer jeweiligen Bearbeitungsmaschine unbeweglich angeordnet oder gehalten, wenn die Inspektionseinrichtung 10 relativ zu dem jeweils zu inspizierenden Gefäß 12 in die Inspektionsposition verfahren wird.

Die Kamera und ihre Objektivlinse definiert längs der optischen Achse der Kamera und der Objektivlinse die Bildaufnahmeachse BA, die mit der Mittellängsachse des zu inspizierenden Gefäßes 12 dann fluchtet, wenn sich dieses in der Inspektionsposition befindet.

Durch die kompakte und sichere Festlegung der Positionen und Orientierungen der Komponenten der Inspektionseinrichtung 10 zueinander und zum zu inspizierenden Gefäß 12 kann die vorliegend beschriebene Inspektionseinrichtung 10 mit vergleichsweise höherer Geschwindigkeit in die / aus der in die Inspektionsposition verfahren werden, als herkömmliche Anordnungen (z.B. aus der DE 10 2010 032 410 A1). Während bei dieser Anordnung eine feste örtliche Beziehung zwischen dem Gefäß in seiner Inspektionsposition und der Kamera zwingend gefordert ist, sieht die hier offenbarte Anordnung vor, die Kamera an dem Rohrabschnitt fest zu montieren und so zu justieren, dass sie in Bezug auf den Ringspiegel (und die Beleuchtung) an dem Rohrabschnitt stets justiert ist. Die im Stand der Technik nicht immer präzise Fixierung sowie Positionierung der Gefäße kann durch die hier vorgestellte Anordnung zumindest teilweise kompensiert werden.

Die hier vorgestellte Anordnung mit der bewegten, also nicht permanent ortsfest angeordneten Kamera ist gegenüber der ortsfesten Kamera mit bewegtem Spiegel zumindest in einigen Situationen deshalb die bessere Lösung, weil hier die Justierung der Kamera zum Ringspiegel festgelegt ist, während bei dem bewegten Ringspiegel und der festen Kamera diese Justierung bei jedem Anfahren der Inspektionsposition aufs Neue gefunden werden muss.

Außerdem ist es mit der hier offenbarten Anordnung möglich, ein Bild der interessierenden Region mit der Kamera anzufertigen, wenn die gesamte Inspektionseinrichtung 10 in Bewegung ist, also wenn der Ringspiegel sich auf das Gefäß zubewegt um es in dem Hohlraum eintauchen zu lassen ("Klick" in Fig. 4 ist jeweils der Belichtungszeitraum), oder wenn sich die Inspektionseinrichtung 10 von dem Gefäß wegbewegt, oder wenn die Inspektionseinrichtung 10 relativ zu Gefäß stillsteht. Die Bildaufnahme erfolgt stets während des Zeitraums, in dem das Gefäß von dem Ringspiegel umschlossen ist. Wenn das Gefäß als defekt erkannt wird, wird dieses zu einem späteren Zeitpunkt aus dem Produktionsprozess ausgesteuert (z.B. ausgeblasen).

Die vorangehend beschriebenen Varianten der Gefäß-Inspektionseinrichtung sowie deren Aufbau- und Betriebsaspekte dienen lediglich dem besseren Verständnis der Struktur, der Funktionsweise und der Eigenschaften; sie schränken die Offenbarung nicht etwa auf die Ausführungsbeispiele ein. Die Fig. sind teilweise schematisch, wobei wesentliche Eigenschaften und Effekte zum Teil deutlich vergrößert dargestellt sind, um die Funktionen, Wirkprinzipien, technischen Ausgestaltungen und Merkmale zu verdeutlichen. Dabei kann jede Funktionsweise, jedes Prinzip, jede technische Ausgestaltung und jedes Merkmal, welches/welche in den Fig. oder im Text offenbart ist/sind, mit allen Ansprüchen, jedem Merkmal im Text und in den anderen Fig., anderen Funktionsweisen, Prinzipien, technischen Ausgestaltungen und Merkmalen, die in dieser Offenbarung enthalten sind oder sich daraus ergeben, frei und beliebig kombiniert werden, so dass alle denkbaren Kombinationen der beschriebenen Gefäß-Inspektionseinrichtung zuzuordnen sind. Dabei sind auch Kombinationen zwischen allen einzelnen Ausführungen im Text, das heißt in jedem Abschnitt der Beschreibung, in den Ansprüchen und auch Kombinationen zwischen verschiedenen Varianten im Text, in den Ansprüchen und in den Fig. umfasst. Auch die Ansprüche limitieren nicht die Offenbarung und damit die Kombinations-möglichkeiten aller aufgezeigten Merkmale untereinander. Alle offenbarten Merkmale sind explizit auch einzeln und in Kombination mit allen anderen Merkmalen hier offenbart.

## Patentansprüche

1. Gefäß-Inspektionseinrichtung (10) zur Untersuchung eines Gefäßes (12) auf Schäden im eine Umbördelung (12a) oder eine Wulst aufweisenden Füll- oder Öffnungsbereiches (12b), die einen Hinterschnitt (12c) bildet, wobei
die Inspektionseinrichtung (10) eine Kamera (14), ein der Kamera (14) zugeordnetes Objektiv (16) und ein weiteres optisches Element (20) aufweist, die in ihren Abständen und ihrer Ausrichtung zueinander und zu einer Bildaufnahmeachse (BA) einstellbar und fixierbar sind, und
das optische Element ein Spiegel ist in Gestalt eines zur Kamera (14) hin sich weitenden Ringspiegels (20), dessen die Bildaufnahmeachse (BA) enthaltender Längsschnitt die Gestalt eines Abschnitts einer Ellipse (EA) hat, wobei der Abschnitt der Ellipse (EA) zwei voneinander abweichende Halbachsen (a, b) hat, wobei die Ellipse gegen die Bildaufnahmeachse (BA) in ihrem Zentrum (Z) um einen Winkel (alpha) so geneigt ist, dass der Abschnitt (EA) der Ellipse von der Bildaufnahmeachse (BA) weiter weg liegt, und das Zentrum (Z) der um den Winkel (alpha) geneigten Ellipse um einen Abstand (h) von der Bildaufnahmeachse (BA) radial nach außen verschoben ist, und wobei die Inspektionseinrichtung (10) zur Inspektion des Füll- oder Öffnungsbereiches (12b) des Gefäßes (12) bei jedem Inspektionsvorgang relativ zum zu inspizierenden Gefäß (12) in eine Inspektionsposition verfahrbar ist.

2. Gefäß-Inspektionseinrichtung (10) nach Anspruch 1, wobei ein Antrieb (26) vorgesehen ist, um zum Aufnehmen eines Bildes zumindest das optische Element relativ zu der interessierenden Region des Gefäßes (12) hin und weg zu verfahren.

3. Gefäß-Inspektionseinrichtung (10) nach Anspruch 1 oder 2, wobei das optische Element (20), eine Beleuchtungseinrichtung (30) und die Kamera (14) mit der Objektivlinse (16) eine als Ganzes längs der Bildaufnahmeachse (BA) verfahrbare Einheit bilden.

4. Gefäß-Inspektionseinrichtung (10) nach Anspruch 3, wobei die Beleuchtungseinrichtung (30) dazu eingerichtet ist, die interessierende Region hinter dem Hinterschnitt (12c) entweder direkt oder indirekt auszuleuchten.

5. Gefäß-Inspektionseinrichtung (10) nach einem der Ansprüche 3 bis 4, wobei die Beleuchtungseinrichtung (30) an einem Ende eines Rohrabschnitts (22), an beiden Enden des Rohrabschnitts (22), oder entlang der Erstreckung des Rohrabschnitts (22) angebracht ist.

6. Gefäß-Inspektionseinrichtung (10) nach einem der Ansprüche 1 bis 4, wobei die Gefäß-Inspektionseinrichtung ist dazu eingerichtet und geeignet, unterschiedliche Gefäße (12) zu inspizieren, indem das optische Element (20) an einem Ende eines Rohrabschnitts (22) angeordnet ist, der an seinem anderen Ende die Kamera (14) mit ihrer Objektivlinse (16) trägt, wobei die Kameraoptik und das optische Element (20) relativ zueinander längsverschiebbar und/oder gegenüber der Bildaufnahmeachse (BA) neigbar, und in der gewünschten Fokus-Stellung festlegbar gestaltet sind.

7. Gefäß-Inspektionseinrichtung (10) nach Anspruch 5, wobei das optische Element und / oder die Kamera (14) mit der Objektivlinse unter Beibehaltung der Fokus- oder Justierlage austauschbar am Ende des Rohrabschnitts (22) arretierbar aufgenommen ist, und/oder
wobei das optische Element (20) am von der Kamera (14) abliegenden Ende des Rohrabschnitts (22) angeordnet ist und ein zwischen dem optischen Element (20) und dem Ende des Rohrabschnitts (22) vorgesehener Ring (28) mit zumindest einem Teil der Beleuchtungseinrichtung (30) vorgesehen ist.

8. Gefäß-Inspektionseinrichtung nach einem der Ansprüche 1 bis 7, wobei die zu inspizierenden Gefäße an einer jeweiligen Bearbeitungsmaschine unbeweglich angeordnet oder gehalten sind, wenn die Inspektionseinrichtung relativ zu dem jeweils zu inspizierenden Gefäß in die Inspektionsposition verfahren wird.

9. Gefäß-Inspektionseinrichtung (10) nach einem der Ansprüche 1 bis 8, wobei die Kamera (14) eine Objektivlinse aus einer oder mehreren Linsen aufweist, und die Kamera (14) mit der Objektivlinse längs der optischen Achse der Kamera (14) und der Objektivlinse eine Bildaufnahmeachse (BA) definiert, die mit der Mittellängsachse des zu inspizierenden Gefäßes (12) dann fluchtet, wenn sich dieses in der Inspektionsposition befindet.

10. Gefäß-Inspektionseinrichtung (10) nach einem der Ansprüche 3 bis 9, wobei der Rohrabschnitt (22) mit dem optischen Element (20) am Ende des Rohrabschnitts (22) und der Beleuchtungseinrichtung (30) an der Kamera (14) und deren Objektivlinse so angeordnet ist, dass das optische Element (20) am Ende des Rohrabschnitts (22) von der Kamera (14) abliegend ist, und wobei
wenigstens das optische Element (20) zumindest teilweise einen Hohlraum umschließt, der so bemessen ist, dass eine interessierende Region an dem Gefäß (12) hinter dem Hinterschnitt (12c) in Richtung des Füll- oder Öffnungsbereiches (12b) in diesen Hohlraum wenigstens ein Stück weit eintauchen kann, damit die Inspektionseinrichtung (10) und die interessierende Region an dem Gefäß (12) die Inspektionsposition zueinander einnehmen.

11. Gefäß-Inspektionseinrichtung (10) nach Anspruch 8, wobei ein Neckerrad oder ein Zangendrehteller vorgesehen ist, in dem die zu inspizierenden Gefäße in einer Inspektionsposition fest an der Bearbeitungsmaschine angeordnet sind.

## Claims

1. A vessel inspection device (10) for examining a vessel (12) for damage in a filling region or opening region (12b) that has a bead (12a) or a bulge, forming an undercut (12c), wherein
the inspection device (10) has a camera (14), an objective (16) assigned to the camera (14), and a further optical element (20), which can be adjusted and fixed in place in terms of their distances from and orientation relative to one another and to an image recording axis (BA), and
the optical element is a mirror in the form of a ring mirror (20) that widens toward the camera (14), the longitudinal section of which, containing the image recording axis (BA), has the form of an ellipsis portion (EA), wherein the portion of the ellipsis (EA) has two semi-axes (a, b) that deviate from one another, wherein the ellipsis is inclined by an angle (alpha) relative to the image recording axis (BA) in its center (Z), in such a manner that the portion (EA) of the ellipsis lies farther away from the image recording axis (BA), and the center (Z) of the ellipsis inclined by the angle (alpha) is displaced radially outward from the image recording axis (BA) by a distance (h), and wherein the inspection device (10) can be moved into an inspection position for inspection of the filling region or opening region (12b) of the vessel (12) during every inspection procedure, relative to the vessel (12) to be inspected.

2. The vessel inspection device (10) according to claim 1, wherein a drive (26) is provided to move at least the optical element back and forth relative to the region of interest of the vessel (12) in order to record an image.

3. The vessel inspection device (10) according to claim 1 or 2, wherein the optical element (20), a lighting device (30), and the camera (14) with the objective lens (16) form a unit that can be displaced as a whole along the image recording axis (BA).

4. The vessel inspection device (10) according to claim 3, wherein the lighting device (30) is set up for illuminating the region of interest behind the undercut (12c) either directly or indirectly.

5. The vessel inspection device (10) according to one of claims 3 to 4, wherein the lighting device (30) is affixed at one end of a tubular section (22), at both ends of the tubular section (22) or along the expanse of the tubular section (22).

6. The vessel inspection device (10) according to one of claims 1 to 4, wherein the vessel inspection device is set up and suitable for inspecting different vessels (12), in that the optical element (20) is disposed at one end of a tubular section (22), which carries the camera (14) with its objective lens (16) at its other end, wherein the camera optics and the optical element (20) are structured so that they can be longitudinally displaced relative to one another and/or inclined relative to the image recording axis (BA), and fixed in place in the desired focus position.

7. The vessel inspection device (10) according to claim 5, wherein the optical element and / or the camera (14) with the objective lens are accommodated at the end of the tubular section (22) in replaceable and locking manner, while maintaining the focusing position or adjustment position, and/or
wherein the optical element (20) is disposed at the end of the tubular section (22) that lies away from the camera (14), and a ring (28) provided between the optical element (20) and the end of the tubular section (22), having at least part of the lighting device (30), is provided.

8. The vessel inspection device according to one of claims 1 to 7, wherein the vessels to be inspected are disposed or held on a respective processing machine in non-movable manner, when the inspection device is moved into the inspection position relative to the vessel to be inspected, in each instance.

9. The vessel inspection device (10) according to one of claims 1 to 8, wherein the camera (14) has an objective lens composed of one or more lenses, and the camera (14) with the objective lens defines an image recording axis (BA) along the optical axis of the camera (14) and the objective lens, which axis aligns with the center longitudinal axis of the vessel (12) to be inspected when it is in the inspection position.

10. The vessel inspection device (10) according to one of claims 3 to 9, wherein the tubular section (22) with the optical element (20) at the end of the tubular section (22) and of the lighting device (30) on the camera (14) and its objective lens are disposed in such a manner that the optical element (20) lies away from the camera (14) at the end of the tubular section (22), and wherein
at least the optical element (20) encloses a cavity, at least in part, which cavity is dimensioned in such a manner that a region of interest on the vessel (12) behind the undercut (12c) in the direction of the filling region or opening region (12b) can dip into this cavity, at least by a certain distance, so that the inspection device (10) and the region of interest on the vessel (12) assume the inspection position relative to one another.

11. The vessel inspection device (10) according to claim 8, wherein a neck wheel or a nippers turntable is provided, in which the vessels to be inspected are firmly disposed on the processing machine in an inspection position.

## Revendications

1. Dispositif d'inspection d'un récipient (10) destiné à inspecter un récipient (12) en vue d'une détection de défauts dans une zone de remplissage ou d'ouverture (12b) comprenant un bord rabattu (12a) ou un bourrelet formant une contre-dépouille (12c), dans lequel
le dispositif d'inspection (10) comprend une caméra (14), un objectif (16) associé à la caméra et un autre élément optique (20), lesquels peuvent être ajustés et fixés quant à leur écartement et leur orientation les uns par rapport aux autres et par rapport à un axe de prise de vue (BA), et dans lequel
l'élément optique est un miroir ayant la forme d'un miroir annulaire (20) s'élargissant en direction de la caméra (14) et dont la section longitudinale comprenant l'axe de prise de vue (BA) se présente sous la forme d'un segment d'ellipse (EA), dans lequel le segment d'ellipse (EA) présente deux demi-axes divergents (a, b), dans lequel l'ellipse est inclinée en son centre (Z) par rapport à l'axe de prise de vue (BA) d'un angle (alpha) de telle sorte que le segment d'ellipse (EA) est plus éloigné de l'axe de prise de vue (BA) et le centre (Z) de l'ellipse inclinée de l'angle (alpha) est décalé radialement vers l'extérieur d'une distance (h), et dans lequel le dispositif d'inspection (10) pour inspecter la zone de remplissage ou d'ouverture (12b) du récipient (12) est apte à être déplacé dans une position d'inspection par rapport au récipient (12) à inspecter lors de chaque opération d'inspection.

2. Dispositif d'inspection de récipients (10) selon la revendication 1, dans lequel un organe d'entraînement (26) est prévu pour déplacer en va-et-vient, lors de la prise de vue, au moins l'élément optique par rapport à la zone d'intérêt du récipient (12).

3. Dispositif d'inspection de récipients (10) selon la revendication 1 ou 2, dans lequel l'élément optique (20), un dispositif d'éclairage et la caméra (14) avec la lentille d'objectif (16) forment une entité déplaçable dans sa totalité le long de l'axe de prise de vue (BA).

4. Dispositif d'inspection de récipients (10) selon la revendication 3, dans lequel le dispositif d'éclairage (30) est agencé pour éclairer soit directement, soit indirectement la région d'intérêt située derrière la contre-dépouille (12c).

5. Dispositif d'inspection de récipients (10) selon la revendication 3 ou 4, dans lequel le dispositif d'éclairage (30) est fixé à une extrémité d'une portion de tube (22), aux deux extrémités de la portion de tube (22) ou le long de l'étendue de la portion de tube (22).

6. Dispositif d'inspection de récipients (10) selon l'une des revendications 1 à 4, dans lequel le dispositif d'inspection de récipients est agencé et adapté pour inspecter divers récipients (12), dans la mesure où l'élément optique (20) est disposé à une extrémité d'une portion de tube (22) munie à son autre extrémité de la caméra (14) avec sa lentille d'objectif (16), l'optique de la caméra et l'élément optique (20) étant réalisés de manière à pouvoir coulisser longitudinalement l'un par rapport à l'autre et/ou à pouvoir être inclinés par rapport à l'axe de prise de vue (BA) et être immobilisés dans la position focale souhaitée.

7. Dispositif d'inspection de récipients (10) selon la revendication 5, dans lequel l'élément optique (20) et/ou la caméra (14) avec sa lentille d'objectif est monté(e) de manière interchangeable et de manière à pouvoir être immobilisé(e) sur l'extrémité de la portion de tube (22), tout en conservant la position focale ou la position d'ajustage, et/ou
dans lequel l'élément optique (20) est disposé à l'extrémité de la portion de tube (20) opposée à la caméra (14), et un anneau (28) portant au moins une partie du dispositif d'éclairage (30) est prévu entre l'élément optique (20) et l'extrémité de la portion de tube (22).

8. Dispositif d'inspection de récipients selon l'une des revendications 1 à 7, dans lequel les récipients à inspecter sont disposés ou maintenus de façon immobile sur une machine de traitement lorsque le dispositif d'inspection est déplacé par rapport au récipient à inspecter pour le mettre en position d'inspection.

9. Dispositif d'inspection de récipients (10) selon l'une des revendications 1 à 8, dans lequel la caméra (14) comprend une lentille d'objectif composée d'une ou de plusieurs lentilles, et la caméra (14) avec la lentille d'objectif définit, le long de l'axe optique de la caméra (14) et de la lentille d'objectif, un axe de prise de vue (BA) qui est en alignement avec l'axe longitudinal central du récipient (12) à inspecter lorsque ce dernier est en position d'inspection.

10. Dispositif d'inspection de récipients (10) selon l'une des revendications 3 à 9, dans lequel la portion de tube (22) avec l'élément optique (20) à l'extrémité de la portion de tube (22) et avec le dispositif d'éclairage sur la caméra (14) et la lentille d'objectif de cette dernière sont disposés de telle sorte que l'élément optique (20) à l'extrémité de la portion de tube (22) est opposé à la caméra (14), et dans lequel
au moins l'élément optique (20) délimite, au moins en partie, une cavité dimensionnée de telle sorte qu'une zone d'intérêt du récipient (12) derrière la contre-dépouille (12c) dans la direction de la zone de remplissage ou d'ouverture (12b) peut, au moins en partie, pénétrer dans cette cavité afin que le dispositif d'inspection (10) et la zone d'intérêt du récipient se mettent en position d'inspection l'un par rapport à l'autre.

11. Dispositif d'inspection de récipients (10) selon la revendication 8, dans lequel un galet à rétreindre ou un plateau tournant à pinces est prévu, immobilisant les récipients à inspecter en position d'inspection sur la machine de traitement.
